# EUROPEAN PATENT APPLICATION

(11) **EP 4 016 407 A1**
(43) Date of publication of application: **22.06.2022**
(21) Application number: 20917136.2
(22) Date of filing: 23.12.2020
(51) Int. Cl.: G06Q 10/00

(54) **USE PLAN CREATION DEVICE, USE PLAN CREATION METHOD, AND PROGRAM**

(30) Priority: 30.01.2020 JP 2020013455
(71) Applicant: Mitsubishi Heavy Industries, Ltd., Chiyoda-ku, Tokyo 100-8332 (JP)
(72) Inventor: KAWACHI, Shun, Tokyo 100-8332 (JP); KAWAMURA, Naoya, Tokyo 100-8332 (JP); SHIOTSUKA, Yuna, Tokyo 100-8332 (JP)
(74) Representative: Henkel & Partner mbB
(86) International application number: PCT/JP2020/048178
(87) International publication number: WO 2021/153114

(57) **Abstract**

Provided is a use plan creation device wherein use parameters that are necessary for creating a component use plan can easily be configured. This use plan creation device comprises: a use plan creation unit that creates, for a machine that is operated with replacements being made during inspections, a component use plan for a prescribed period that is from the start of use and includes the dates of inspections; a parameter table management unit that receives a configuration of parameter table information and registers the parameter table information, said parameter table information being necessary for the creation of a schedule for future inspections and including configuration information that relates to inspections, information about component use parameters, and information about machine operation parameters; and a parameter table application unit that receives a selection, from among the registered parameter table information, of one or a plurality of items of parameter table information to be applied to the use plan, and provides instructions causing said parameter table information to be reflected in the use plan. The use plan creation unit recreates the use plan on the basis of the parameter table information designated by the parameter table application unit.

## Description

### Technical Field

The present disclosure relates to an operation plan creation device, an operation plan creation method, and a program.

This application claims priority based on Japanese Patent Application No. 2020-13455 filed in Japan on January 30, 2020, the contents of which are incorporated herein by reference.

### Background Art

Various components are used in a machine. The lifespan differs among such components. Thus, the components are managed by what is known as rotation (parts rotation), which is a scheme in which a periodic inspection is repeated until the lifespan expires and the components are replaced with a spare component or a repaired component depending on the consumed state. Such components include expensive and essential components, and thus it is important for a user managing a machine to create a rotation plan enabling an operation at a low cost.

As a related art, Patent Document 1 discloses a detection and display device for the management of components that need periodic replacement and are for a color copying machine. The detection and display device detects and displays the component service life of each periodic replacement component group classified according to the criterion that components having almost the same service life can be replaced at the same time. This allows a periodic replacement component group including a component that has reached a service life warning value to be replaced in whole at the same time.

### Citation List

### Patent Literature

Patent Document 1: JP 09-146421 A

### Summary of Invention

### Technical Problem

In order to create a parts rotation plan, a simulation of component replacement or the like is performed under various operating conditions such as timing of a periodic inspection or a service life of each component. Then, for example, operating conditions and a parts rotation plan are created such that the lowest cost is achieved. Increase in the number of settable operating conditions makes a setting operation complicated, causing difficulty in setting all conditions easily without omission.

The present disclosure provides an operation plan creation device, an operation plan creation method, and a program that can solve the above-described problem.

### Solution to Problem

An operation plan creation device according to the present disclosure includes: an operation plan creation unit that creates an operation plan for components of a machine, which is operated with the components replaced at a time of an inspection, for a predetermined period of time from an operation start including a date of the inspection; a condition table management unit that receives settings of condition table information necessary for creating a schedule of the inspection in the future and including inspection-related setting information, attribute information of the components, and information about operating conditions of the machine, and registers the condition table information; and a condition table application unit that receives selection of one or multiple condition table information to be applied to the operation plan from among the condition table information registered, and instructs to reflect the condition table information selected into the operation plan. The operation plan creation unit recreates the operation plan based on the condition table information as instructed by the condition table application unit.

An operation plan creation method according to the present disclosure includes: a step of creating an operation plan for components of a machine, which is operated with the components replaced at a time of an inspection, for a predetermined period of time from an operation start including a date of the inspection; a step of receiving settings of condition table information necessary for creating a schedule of the inspection in the future and including inspection-related setting information, attribute information of the components, and information about operating conditions of the machine, and registering the condition table information; a step of receiving selection of one or multiple condition table information to be applied to the operation plan from among the condition table information registered; and a step of recreating the operation plan based on the condition table information selected.

A program according to the present disclosure causes a computer to execute: a step of creating an operation plan for components of a machine, which is operated with the components replaced at a time of an inspection, for a predetermined period of time from an operation start including a date of the inspection; a step of receiving settings of condition table information necessary for creating a schedule of the inspection in the future and including inspection-related setting information, attribute information of the components, and information about operating conditions of the machine, and registering the condition table information; a step of receiving selection of one or multiple condition table information to be applied to the operation plan from among the condition table information registered; and a step of recreating the operation plan based on the condition table information selected.

### Advantageous Effects of Invention

According to the operation plan creation device, the operation plan creation method, and the program described above, operating conditions related to parts rotation can be easily set.

### Brief Description of Drawings

FIG. 1 is a diagram illustrating an example of an operation plan creation device according to an embodiment of the present disclosure.
FIG. 2 is a first diagram illustrating an example of a setting screen according to an embodiment of the present disclosure.
FIG. 3 is a second diagram illustrating an example of a setting screen according to an embodiment of the present disclosure.
FIG. 4 is a diagram illustrating an example of a parts rotation plan table according to an embodiment of the present disclosure.
FIG. 5 is a diagram illustrating an example of a condition table list screen (setting) according to an embodiment of the present disclosure.
FIG. 6 is a diagram illustrating an example of a condition table setting screen according to an embodiment of the present disclosure.
FIG. 7 is a diagram illustrating an example of a condition table list screen (application) according to an embodiment of the present disclosure.
FIG. 8 is a diagram illustrating an example of a condition table application timing screen according to an embodiment of the present disclosure.
FIG. 9 is a flowchart illustrating an example of processing executed by an operation plan creation device according to an embodiment of the present disclosure.
FIG. 10 is a third diagram illustrating an example of a setting screen according to an embodiment of the present disclosure.
FIG. 11 is a fourth diagram illustrating an example of a setting screen according to an embodiment of the present disclosure.
FIG. 12 is a second diagram illustrating an example of a parts rotation plan table according to an embodiment of the present disclosure.
FIG. 13 is a diagram illustrating an example of a hardware configuration of an operation plan creation device according to each embodiment.

### Description of Embodiments

### Embodiments

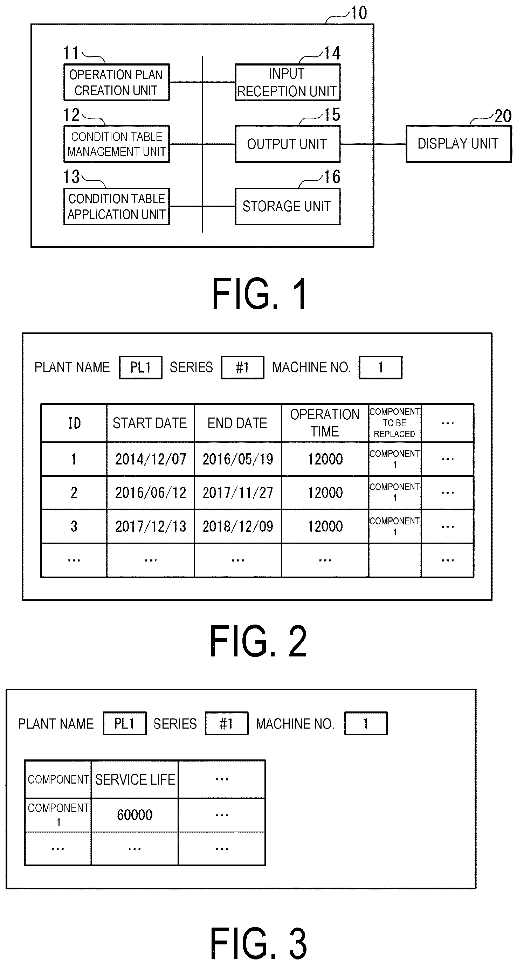

An operation plan creation device according to each embodiment will be described below with reference to FIGS. 1 to 13.

### Configuration

FIG. 1 is a diagram illustrating an example of an operation plan creation device according to an embodiment of the present disclosure.

The operation plan creation device 10 illustrated in FIG. 1 creates data of an operation plan for components mounted on a machine operated in a plant or a facility. The operation plan refers to a so-called parts rotation plan for replacing a component in use with a spare component, a repaired component, or a new component. Parts rotation may be performed using a spare component or a repaired component prepared in advance for an identical machine, or may be performed using a spare component or a repaired component prepared for a different machine. Or, a new component may be purchased for replacement. A component is used by being mounted on any machine without being discarded until the end of its service life, except in case of a failure or the like. The operation plan creation device 10 may include one or more computers such as server terminal devices.

As illustrated in FIG. 1, the operation plan creation device 10 includes an operation plan creation unit 11, a condition table management unit 12, a condition table application unit 13, an input reception unit 14, an output unit 15, and a storage unit 16.

The operation plan creation unit 11 creates a parts rotation plan for components for a predetermined period of time from the start of operation of a machine. The operation plan creation unit 11 generates a screen to display the parts rotation plan and various setting screens necessary for creating the parts rotation plan.

The condition table management unit 12 provides a function of setting various operating conditions that affect the parts rotation plan.

The condition table application unit 13 provides a function of reflecting conditions set by using the condition table management unit 12 into the parts rotation plan.

For example, it is possible to cause the condition table management unit 12 to set conditions 1 to 3, create a parts rotation plan for operation under the condition 1, a parts rotation plan for operation under the condition 2, and a parts rotation plan for operation under the condition 3 by use of the condition table application unit 13, and then compare the parts rotation plans to each other.

The input reception unit 14 receives an input of instruction information or the like from a user to the operation plan creation device 10.

The output unit 15 outputs a parts rotation plan table to a display unit 20 connected to the operation plan creation device 10. The display unit 20 is a display device such as a liquid crystal display or an organic EL display. The output unit 15 outputs the parts rotation plan table and condition table data registered by the condition table management unit 12, as electronic files.

The storage unit 16 stores various data and programs necessary for creating operation plan data.

First, an outline of functions included in the operation plan creation unit 11 will be described with reference to FIGS. 2 to 4. For a machine that is operated with components replaced at a timing of a periodic inspection or the like, the operation plan creation unit 11 creates a parts rotation plan, when an operation start date, a timing of a periodic inspection, a component to be replaced, service life of the component, or the like are set.

FIG. 2 is a first diagram illustrating an example of a setting screen according to an embodiment of the present disclosure.

The operation plan creation unit 11 generates a setting screen of an operation plan illustrated in FIG. 2.

In the example of FIG. 2, a machine having a plant name "PL1", a series "#1", and a machine number "1" is set to operate for an operation time of "12000" hours from "2014/12/7 to 2016/5/19", and then undergo an inspection at which "COMPONENT 1" is replaced, and subsequently, to operate for an operation time of "12000" hours from "2016/6/12 to 2017/11/27", and then undergo an inspection at which "COMPONENT 1" is replaced. The user who plans a parts rotation sets a start date, an end date, and an operation time on this setting screen. Setting of a component to be replaced is determined by other processing.

FIG. 3 is a second diagram illustrating an example of a setting screen according to an embodiment of the present disclosure.

The operation plan creation unit 11 generates a setting screen of service lives of components illustrated in FIG. 3.

In the example of FIG. 3, a service life of "60000" is set to a component 1 used in a machine having a plant name "PL1", a series "#1", and a machine number "1". The user who plans a parts rotation can set a service life for every component used in the machine No. 1 on this screen. For example, the replacement timing of the component 1 is changed when its service life is changed, which affects a parts rotation plan.

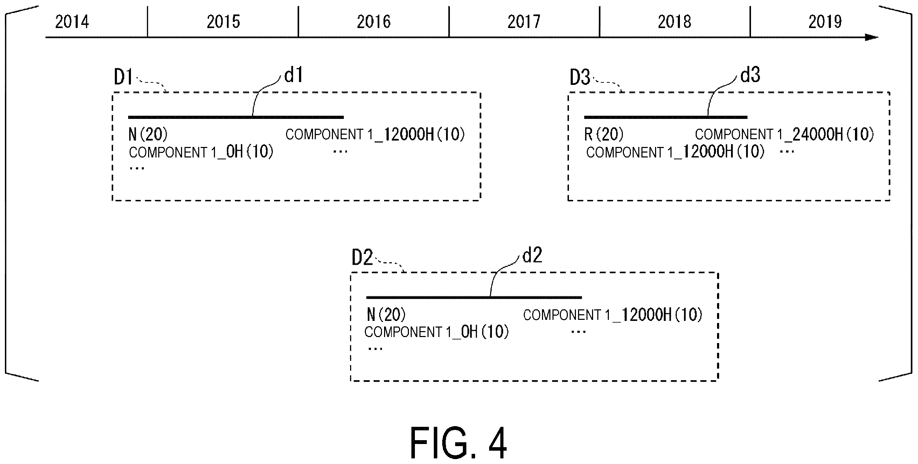

FIG. 4 is a diagram illustrating an example of a parts rotation plan table according to an embodiment of the present disclosure.

For example, in the operation plan where "COMPONENT 1" is replaced at every inspection as in the settings illustrated in FIG. 2, the user may further specify that, the "COMPONENT 1" mounted on the machine No. 1 since operation start is removed at the next periodic inspection and a new "COMPONENT 1" prepared as a spare component is mounted on the machine No. 1, and the new "COMPONENT 1" mounted on the machine No. 1 is removed at the periodic inspection after the next and the "COMPONENT 1" removed at the previous periodic inspection is mounted again on the machine No. 1.

When the user sets operating conditions on the setting screens illustrated in FIGS. 2 and 3 or the like and performs an operation to instruct the creation of a parts rotation plan table, the operation plan creation unit 11 creates the parts rotation plan table (parts rotation screen) illustrated in FIG. 4.

D1 in FIG. 4 indicates the operation corresponding to the setting of ID = 1 in FIG. 2. The solid line d1 indicates the time period from the start date to the end date of the ID = 1 on the setting screen illustrated in FIG. 2. N (20) in "N (20) COMPONENT 1_0H (10)" indicated at the start point of the solid line d1 means that twenty new components are mounted at the start date. "COMPONENT 1_0H (10)" means that, ten out of twenty components mounted are "COMPONENT 1" having a consumption time of 0 hours (it means new). Although not illustrated, other components are mounted as the remaining ten components. "COMPONENT 1_12000H (10)" indicated at the end point of the solid line d1 means that the consumption time of "COMPONENT 1" has reached 12000 hours after the operation from 2014/12/7 to 2016/5/19.

Similarly, D2 in FIG. 4 indicates the operation corresponding to the setting of ID = 2 in FIG. 2. This indicates that the machine No. 1 is mounted with the new spare "COMPONENT 1" and operated from 2016/6/12 to 2017/11/27.

Similarly, D3 in Figure 4 indicates the operation corresponding to the setting of ID = 3 in FIG. 2. This indicates that the machine No. 1 is mounted with the "COMPONENT 1", which was once removed, and operated from 2017/12/13 to 2018/12/9. R (20) at the start point of d3 means that the components mounted this time are not new components, but repaired components.

In the related art, a user creates a parts rotation screen by making settings for each plant and each machine one by one on the setting screens illustrated in FIGS. 2 and 3, or the like. For example, when three machines Nos. 1 to 3 are installed in a plant "PL1", it is necessary to make settings for each of the three machines. When the number of plants is ten, and three machines are installed in each plant, settings need to be made for thirty machines. Executing this setting operation for all plants without omission and repeating the creation of parts rotation screens under various conditions until obtaining an optimum parts rotation plan are troublesome and cause high workload. Thus, the present embodiment provides a function to make a setting operation efficient and reflect the settings into a parts rotation plan.

Settings necessary for creating a parts rotation plan are collectively referred to as a condition table. The settings necessary for creating a parts rotation plan include setting information related to inspection (an inspection pattern, an inspection interval, an application start date of the inspection pattern, an application end date of the inspection pattern, and the like), attribute information of components (service lives and necessity of replacement of the components, and the like), operating conditions of a machine (operation time during an arbitrary period), and the like.

### Registration of Condition Table

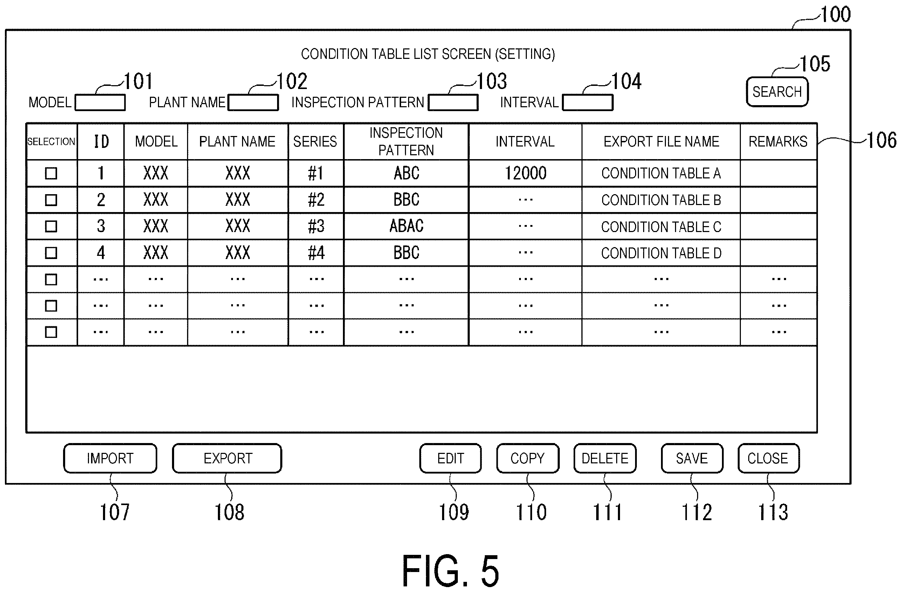

FIG. 5 is a diagram illustrating an example of a condition table list screen (setting) according to an embodiment of the present disclosure.

A condition table list screen 100 illustrated in FIG. 5 is a screen created by the condition table management unit 12. The condition table list screen 100 includes input fields 101 to 104 for "MODEL", "PLANT NAME", "INSPECTION PATTERN", and "INTERVAL", a list display area 106 that displays a list of registered condition tables searched based on values input to the input fields, a search button 105, an import button 107, an export button 108, an edit button 109, a copy button 110, a delete button 111, a save button 112, and a close button 113.

Search conditions are input to a model input field 101, a plant name input field 102, an inspection pattern input field 103, and an interval input field 104. When a user inputs a value to any of the model input field 101, the plant name input field 102, the inspection pattern input field 103, and the interval input field 104, and press the search button 105, the input reception unit 14 accepts this operation. The condition table management unit 12 selects a condition table that satisfies the search condition from among condition tables registered in the storage unit 16 and displays it in the list display area 106. The list display area 106 includes items of "SELECTION", "ID", "MODEL", "PLANT NAME", "SERIES", "INSPECTION PATTERN", "INTERVAL", "EXPORT FILE NAME", and "REMARKS". One row of the list display area 106 corresponds to one condition table.

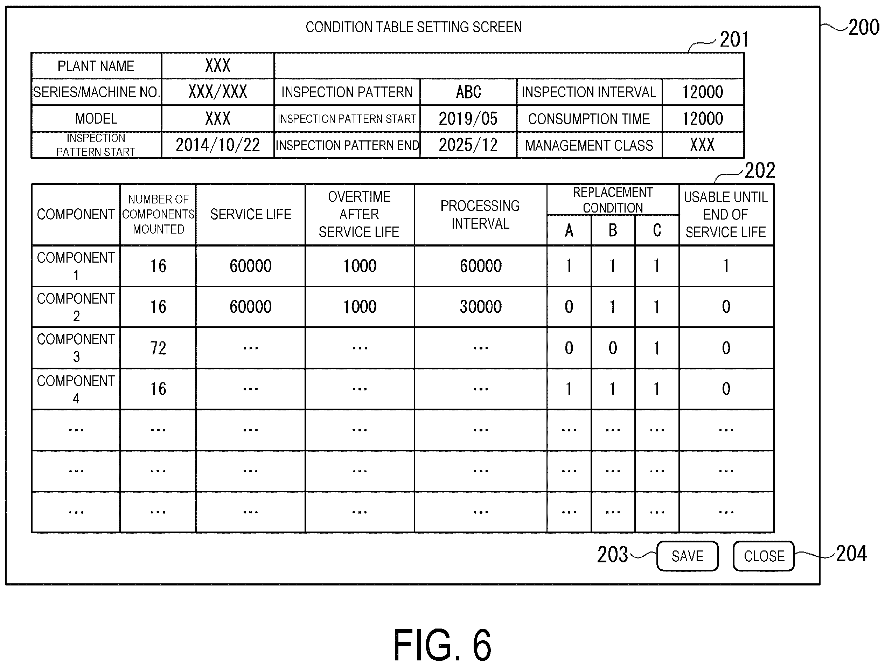

For example, when the user selects the row of ID = 1, the selection field of the first row is ticked off. In this state, when the user presses the edit button 109, the condition table management unit 12 displays the condition table setting screen 200 to be described below with reference to FIG. 6. One condition table can be set in the condition table setting screen 200, as described later.

When the user presses the copy button 110 in a state where the first row is selected, the condition table management unit 12 creates a new condition table in which the settings of the condition table of the first row are copied, assigns an ID to the new condition table, and registers it in the storage unit 16. Then, the condition table management unit 12 adds one row to the last row of the list display area 106 to add the new condition table created.

When the user presses the delete button 111 in a state where the first row is selected, the condition table management unit 12 deletes the condition table in the first row from the list display area 106.

When the user presses the save button 112, the condition table management unit 12 saves a change. For example, when the user deletes the condition table in the first row by using the delete button 111, the condition table management unit 12 delete the condition table in the first row from the storage unit 16. Thereby, the deletion is determined.

When the user presses the closed button 113, the condition table management unit 12 stops displaying the condition table list screen 100.

When the user presses the import button 107, the condition table management unit 12 reads an electronic file in which settings of a condition table are written in a predetermined layout, assigns an ID to that settings, and registers the settings to the storage unit 16. The condition table management unit 12 adds the imported condition table to the list display area 106 to display it.

For example, when the user presses the export button 108 in a state where the first row is selected, the condition table management unit 12 outputs an electronic file including the settings of the condition table in the first row of ID = 1.

According to the condition table list screen 100, for example, the user can specify a plant name and a model and press the search button to display a list of condition tables applicable to a machine that satisfies the search conditions. For example, when there are other conditions to be tried in considering a parts rotation plan, a new condition table can be created by using the copy button 110, and then new settings can be registered on the condition table setting screen 200 to be described below.

FIG. 6 is a diagram illustrating an example of a condition table setting screen according to an embodiment of the present disclosure.

The condition table setting screen 200 illustrated in FIG. 6 is a screen created by the condition table management unit 12 when the edit button 109 is pressed on the condition table list screen 100. In the condition table setting screen 200, settings of one condition table can be made.

As illustrated, the condition table setting screen 200 includes an operation plan setting area 201, a component information setting area 202, a save button 203, and a close button 204.

In the operation plan setting area 201, items of "PLANT NAME", "SERIES", "MACHINE NO.", "MODEL", "OPERATION START DATE", "INSPECTION PATTERN", "INSPECTION PATTERN START", "INSPECTION PATTERN END", "INSPECTION INTERVAL", "CONSUMPTION TIME", and "MANAGEMENT CLASS" can be set.

"PLANT NAME", "SERIES", "MACHINE NO.", and "MODEL" are information related to a machine for which a parts rotation plan is created. For example, an ID of a machine is set in "MACHINE NO.".

"OPERATION START DATE" is a date when a machine starts operating.

"INSPECTION PATTERN" indicates the type of inspection performed at every periodic inspection. For example, ABC means that an inspection A is performed at the first periodic inspection, an inspection B is performed at the next periodic inspection, and an inspection C is performed at the next next periodic inspection, and thereafter, the same cycle is repeated. The inspections A, B, and C differ from each other in an inspection range (for example, A < B < C), components to be replaced, or the like.

"INSPECTION PATTERN START" and "INSPECTION PATTERN END" specify a period where a periodic inspection is performed according to an inspection pattern set in "INSPECTION PATTERN".

The interval of an inspection is set in "INSPECTION INTERVAL". The example of FIG. 6 shows that an inspection is performed each time an operation time of a machine reaches 12000 hours over a period of time from 2019/5 to 2025/12.

"CONSUMPTION TIME" indicates an operation time of a machine over an arbitrary period of time. For example, when an arbitrary period of time is 1 year, the value of "INSPECTION INTERVAL" is 12000, and "CONSUMPTION TIME" is 12000, inspection is performed every year. For example, when an arbitrary period of time is 2 years, the value of "INSPECTION INTERVAL" is 12000, and "CONSUMPTION TIME" is 6000, an inspection is performed every 4 years.

The management class is set so as to specify whether "INSPECTION INTERVAL", "CONSUMPTION TIME", and a service life of a component to be described below are managed simply based on the operation time of a machine, or based on the operation time of a machine with consideration of a load such as start and stop of a machine.

The component information setting area 202 includes items of "COMPONENT", "NUMBER OF COMPONENTS MOUNTED", "SERVICE LIFE", "OVERTIME AFTER SERVICE LIFE", "PROCESSING INTERVAL", "REPLACEMENT CONDITION", and "USABLE UNTIL END OF SERVICE LIFE" for each component. The items other than "COMPONENT" and "NUMBER OF COMPONENTS MOUNTED" are editable.

A component name or a component ID is displayed in "COMPONENT".

The number of components mounted and used on a machine is displayed in "NUMBER OF COMPONENTS MOUNTED". A service life of a component is set in "SERVICE LIFE".

An acceptable time period exceeding a service life is set in "OVERTIME AFTER SERVICE LIFE". For example, for "COMPONENT 2", the overtime after service life is set to 1000 hours. In this case, an inspection B is to be performed when an operation time reaches 60100 hours, and "COMPONENT 2" is to be replaced at the inspection B, that is, "COMPONENT 2" can be used until the inspection B performed at 100 hours after the end of a service life.

A timing of performing various types of processing is set in "PROCESSING INTERVAL". The various types of processing are processing performed on components such as repair or maintenance necessary for long-term use of the components while replacing the components. For example, in the case of "COMPONENT 2", a component 2 is temporarily removed from a machine in operation before an operation time reaches 30000 hours, subjected to predetermined various processing, and mounted again for use on the same machine or another machine at a timing of an inspection after the processing.

In "REPLACEMENT CONDITION", whether a component can be replaced at each of inspections A, B, and C is set. "1" means it can be replaced, and "0" means it cannot be replaced.

In "USABLE UNTIL END OF SERVICE LIFE", whether it is possible to use a component until the end of its service life without replacement is set. "1" means it is possible, and "0" means it is impossible. By having "1" in "USABLE UNTIL END OF SERVICE LIFE", and "1" in all of A, B, and C in the replacement condition, "COMPONENT 1" continues to be used until the end of its service life without being replaced, and then is replaced at the time of the last inspection performed before the elapse of 61000 hours which is the sum of its service life and the overtime after service life. By having "0" in "USABLE UNTIL END OF SERVICE LIFE", "COMPONENT 2" continues to be used until the end of its service life while being replaced several times at the times of inspections B and C.

When settings in the operation plan setting area 201 and in the component information setting area 202 are completed and then the save button 203 is pressed, the condition table management unit 12 registers the contents set in the condition table setting screen 200 as one condition table in the storage unit 16.

When the close button 204 is pressed, the condition table management unit 12 stops displaying the condition table setting screen 200, and displays the condition table list screen 100.

Use of the condition table list screen 100 and the condition table setting screen 200 facilitates the registration of condition tables. For example, when the number of plants is ten, and three machines are installed in each plant, one condition table can be imported as a sample by using the import button 107 of the condition table list screen 100, and thirty condition tables can be created by using the copy button 110. It is possible to easily change or confirm settings on the condition table setting screen 200. The thirty condition tables created can be displayed in a list on the condition table list screen 100, and the list can be narrowed down by a plant name or a model, which makes it easy to manage them. In the case where settings of a condition table are variously changed, a condition table as a base can be copied by using the copy button 110, and various condition tables with slight changes can be registered and saved. Then, the various condition tables can be reflected into a parts rotation plan by using a function of applying condition tables to be described below, and thereby parts rotation plans for operations under various conditions can be confirmed quickly and easily.

### Application of Condition Tables

Next, a function of applying condition tables by the condition table application unit 13 will be described.

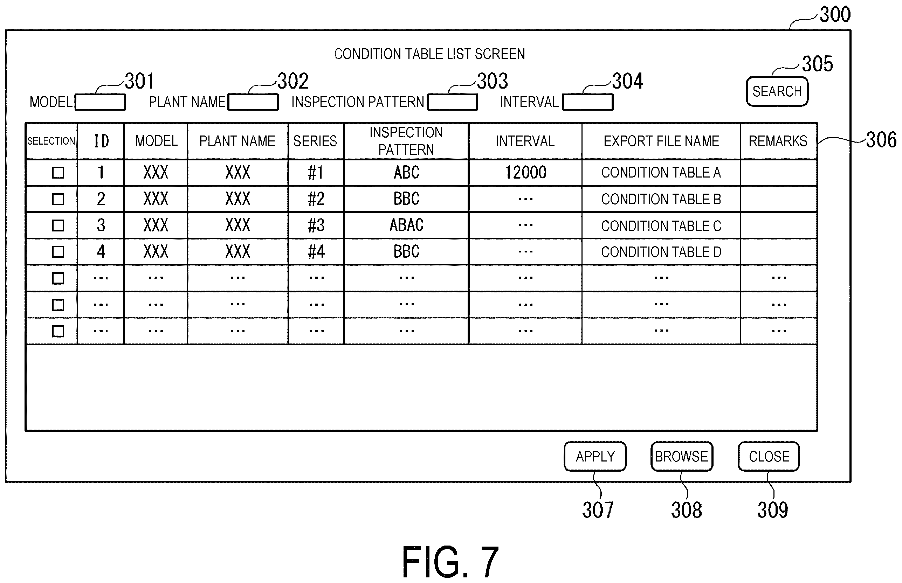

FIG. 7 is a diagram illustrating an example of a condition table list screen (application) according to an embodiment of the present disclosure.

The condition table list screen 300 illustrated in FIG. 7 is a screen created by the condition table application unit 13. The condition table list screen 300 includes input fields 301 to 304 for "MODEL", "PLANT NAME", "INSPECTION PATTERN", and "INTERVAL", a list display area 306 that displays a list of registered condition tables searched based on values input to the input fields, a search button 305, an apply button 307, a browse button 308, and a close button 309.

Search conditions are input in a model input field 301, a plant name input field 302, an inspection pattern input field 303, and an interval input field 304. When the user inputs a value in any of the model input field 301, the plant name input field 302, the inspection pattern input field 303, and the interval input field 304, and press the search button 305, the input reception unit 14 accepts this operation. The condition table application unit 13 selects a condition table that satisfies the search condition from condition tables registered in the storage unit 16 and displays it in the list display area 306. The list display area 306 includes items of "SELECTION", "ID", "MODEL", "PLANT NAME", "SERIES", "INSPECTION PATTERN", "INTERVAL", "EXPORT FILE NAME", and "REMARKS". One row of the list display area 306 corresponds to one condition table.

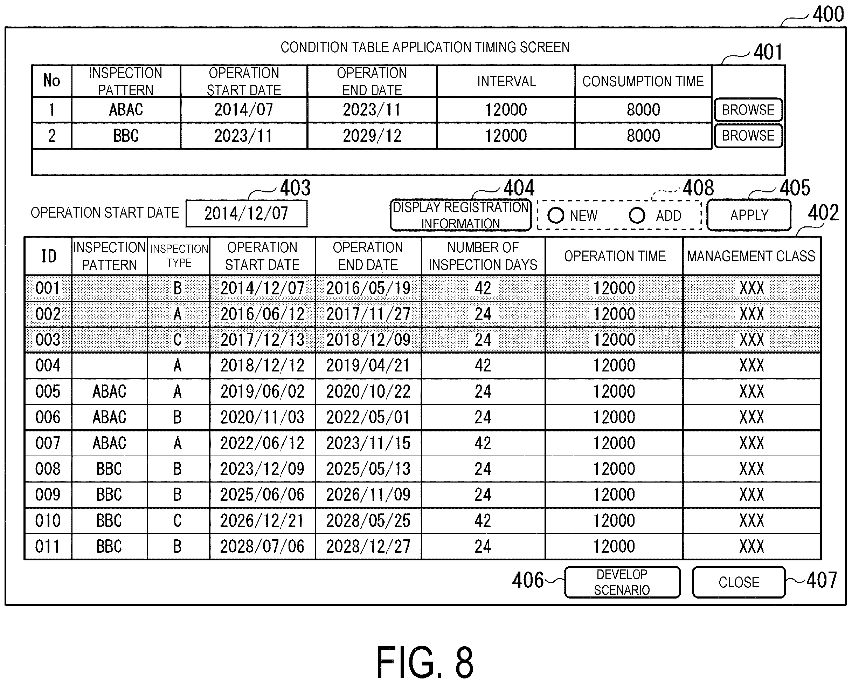

For example, when the user selects the row of ID = 1, the selection field of the first row is ticked off. In this state, when the user presses the apply button 307, the condition table application unit 13 displays the condition table application timing screen 400 to be described below with reference to FIG. 8.

When the user presses the browse button 308 in a state where the first row is selected, the condition table management unit 12 displays the condition table setting screen 200 displaying the settings of the condition table in the first row. This allows the user to confirm the settings before applying the condition table.

When the user presses the close button 309, the condition table application unit 13 stops displaying the condition table list screen 300.

According to the condition table list screen 300, for example, the user can specify a plant name and a model and press the search button to display a list of condition tables applicable to a machine that satisfies the search conditions. For example, when there are conditions to be tried in considering a parts rotation plan, the user can select any condition table(s) (multiple selection allowed) from the list and press the apply button 307 to apply the condition table(s) to an existing scenario.

FIG. 8 is a diagram illustrating an example of a condition table application timing screen according to an embodiment of the present disclosure.

The condition table application timing screen 400 illustrated in FIG. 8 is a screen created by the condition table application unit 13 when the apply button 307 is pressed on the condition table list screen 300. On the condition table application timing screen 400, settings of one or multiple condition tables can be made.

As illustrated, the condition table application timing screen 400 includes a condition table display area 401, an inspection plan display area 402, an operation start date input field 403, a display registration information button 404, an apply button 405, a develop scenario button 406, a close button 407, and an application mode selection field 408.

The condition table display area 401 displays the condition tables selected on the condition table list screen 300.

When an operation start date is input in the operation start date input field 403 and the display registration information button 404 is pressed, the condition table application unit 13 displays the results of the inspections after the operation start date specified (IDs = 001 to 003 in FIG. 8) and currently planned inspections (ID = 004 in FIG. 8) in the inspection plan display area 402, for the machine that is a target of the condition tables displayed in the condition table display area 401.

When "NEW" is selected in the application mode selection field 408 and the apply button 405 is pressed, the condition table application unit 13 displays the inspection plan according to the condition table displayed in the condition table display area 401 in the inspection plan display area 402, overwriting the current plan (ID = 004).

When "ADD" is selected in the application mode selection field 408 and the apply button 405 is pressed, the condition table application unit 13 displays the inspection plan according to the condition table displayed in the condition table display area 401 in the inspection plan display area 402, adding it below the current plan (ID = 004).

The inspection plan display area 402 in FIG. 8 shows an example of the case where "ADD" is selected in the application mode selection field 408 and the apply button 405 is pressed. When "NEW" is selected and the apply button 405 is pressed, the ID = 004 in FIG. 8 is deleted, and IDs = 005 to 011 are displayed as IDs = 004 to 010.

When adding an inspection plan to the inspection plan display area 402, the condition table application unit 13 calculates an inspection time and an operation period of time (the operation start date and the operation end date in the inspection plan display area 402) by using the inspection pattern start, the inspection pattern end, the inspection interval, and the annual consumption time set in the condition table. The condition table application unit 13 determines an inspection type, and the number of inspection days on the inspection plan display area 402 based on the inspection pattern in the condition table. Hereinafter, the information displayed in the inspection plan display area 402 may be described as inspection schedule information.

The develop scenario button 406 is a button to instruct the development to the parts rotation plan table illustrated in FIG. 3. For example, it is assumed that the parts rotation plan table according to IDs = 001 to 004 is created as an initial plan by the operation plan creation unit 11 and registered in the storage unit 16. Then, when the user wants to confirm what the parts rotation will be like in the future if an inspection is performed according to the inspection pattern of ABAC until the end of 2023 and thereafter according to the inspection pattern of BBC as inspection plans, the user registers a condition table for performing the inspection pattern of ABAC until the end of 2023 and a condition table for performing the inspection pattern of BBC after the end of 2023 on the condition table setting screen 200. Then, the user selects the registered condition tables on the condition table list screen 300, calls up the condition table application timing screen 400, selects "NEW" or "ADD" in the application mode selection field 408, and then press the apply button 405, so that the plans according to the inspection patterns set in the condition tables registered are reflected into the inspection plan display area 402. After confirming that the future inspection plans displayed in the inspection plan display area 402 are correct, the user presses the develop scenario button 406. Then, the operation plan creation unit 11 updates the parts rotation plan table registered in the storage unit 16 in accordance with the inspection plans displayed in the inspection plan display area 402. Because the operation plan creation unit 11 can output a parts rotation plan table in an electronic file, by saving an electronic file of a parts rotation plan table corresponding to a condition table each time a parts rotation plan table is created with a condition table changed, the user can compare and evaluate a parts rotation plan table and a corresponding condition table side by side. The user confirms the parts rotation plan table according to the two condition tables registered by referencing the updated parts rotation plan table. The user can register various condition tables, simulate a plurality of operation patterns, and compare them in a similar way.

When the user presses the close button 407, the condition table application unit 13 stops displaying the condition table application timing screen 400 and displays the condition table list screen 300.

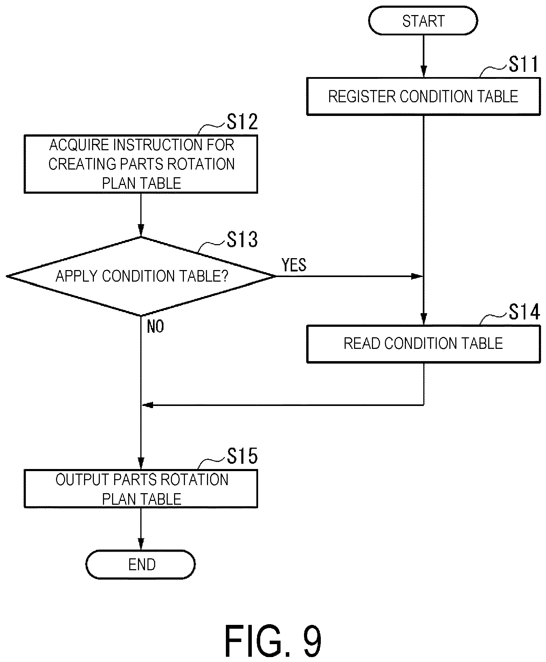

FIG. 9 is a flowchart illustrating an example of processing executed by an operation plan creation device according to an embodiment of the present disclosure.

First, the user performs a predetermined operation to call up the condition table list screen 100. The condition table management unit 12 generates the condition table list screen 100 and outputs the condition table list screen 100 to the output unit 15. The output unit 15 displays the condition table list screen 100 on the display unit 20. Next, for example, the user presses the edit button 109 to call up the condition table setting screen 200, and makes desired settings to set a condition table. The condition table management unit 12 registers the information (the condition table) input on the condition table setting screen 200 to the storage unit 16 (step S11).

Then, the user performs a predetermined operation to instruct the operation plan creation device 10 to create a parts rotation plan table. In the operation plan creation device 10, the input reception unit 14 accepts this instruction operation, and outputs the information about instruction to create the parts rotation plan table to the operation plan creation unit 11.

The operation plan creation unit 11 determines whether to apply the condition table (step S13). For example, when the user presses the develop scenario button 406 on the condition table application timing screen 400, the condition table application unit 13 outputs the information displayed in the inspection plan display area 402 and the source information thereof including a service life of a component set in the condition table displayed in the condition table display area 401 to the operation plan creation unit 11, and instructs to create a parts rotation plan table by applying the condition table. In this case, the operation plan creation unit 11 determines to apply the condition table. In other cases, the condition table application unit 13 determines not to apply the condition table.

When the condition table is not applied (step S13; No), for example, the user makes initial settings of a plant name, a series, a machine No., an operation start date, an inspection pattern, an inspection interval, a service life of a component, a component replacement timing, and the like, and then instructs the operation plan creation device 10 to create a parts rotation plan table. Then, the operation plan creation unit 11 simulates component replacement at a time of an inspection with reference to, for example, the inventory information of spare components prepared in the designated plant, and creates a parts rotation plan table as illustrated in FIG. 3. The output unit 15 displays the parts rotation plan table in the display unit 20 (step S15).

When the condition table is applied (step S13; Yes), the operation plan creation unit 11 reads the condition table to be applied (step S14), and updates an existing parts rotation plan table to create a parts rotation plan table for a period of time displayed in the inspection plan display area 402. For example, in the case of the example in FIG. 8, it is assumed that a parts rotation plan table for up to ID = 004 is already created in the existing parts rotation plan table. The operation plan creation unit 11 creates a parts rotation plan table reflecting that: an inspection A is performed after 2019/4/21 and some components are replaced at that time; after the inspection, a machine is operated from 2019/6/2 to 2019/10/22, and then an inspection B is performed ...; then, from after 2023/11/15 until 2028/12/27, components are managed in a similar manner according to the inspection pattern BBC. The output unit 15 displays the parts rotation plan table in the display unit 20 (step S15).

### Effect

Next, the effects of the present embodiment will be described.

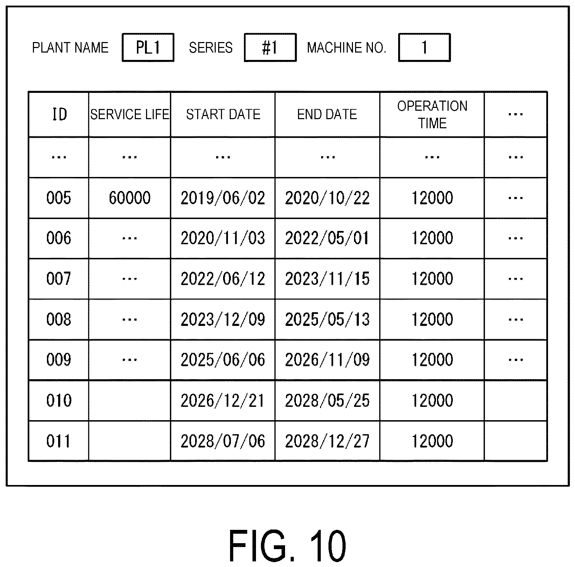

FIG. 10 is a third diagram illustrating an example of a setting screen according to an embodiment of the present disclosure.

The setting screen illustrated in FIG. 10 is the same screen as the setting screen illustrated in FIG. 2.

When IDs = 005 to 011 are added and the develop scenario button 406 is pressed on the condition table application timing screen 400 illustrated in FIG. 8, the operation plan creation unit 11 automatically creates the schedule information for the inspection related to IDs = 005 to 011 and registers it in the storage unit 16. Then, when the conditions of the plant name "PL1", the series "#1", and the machine number "1" are set on the setting screen illustrated in FIG. 10 to display the inspection schedule for this machine, the registered data is displayed as illustrated in FIG. 10.

In the related art, a user has manually set operation information on a row-by-row basis on this screen. According to the present embodiment, the above operation can be done automatically and efficiently by registering and reflecting condition tables.

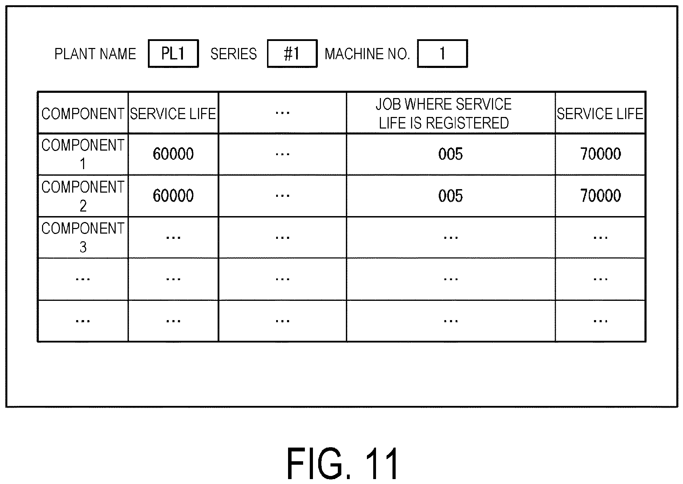

FIG. 11 is a fourth diagram illustrating an example of a setting screen according to an embodiment of the present disclosure.

The setting screen illustrated in FIG. 11 is the same screen as the setting screen illustrated in FIG. 3.

For example, on the condition table setting screen 200 illustrated in FIG. 6, the service lives of component 1 and component 2 are changed from 60000 to 70000 and saved. Subsequently, a condition table in which the service lives are extended is selected on the condition table list screen 300 illustrated in FIG. 7, and the develop scenario button 406 is pressed on the condition table application timing screen 400. Then, the operation plan creation unit 11 registers in the storage unit 16 the inspection schedule information created by using the values of the inspection pattern, the inspection interval, the inspection pattern start, the inspection pattern end, and the annual consumption time specified in the condition table selected. The operation plan creation unit 11 records in the storage unit 16 the information indicating that a service life of 70000 has been registered for the component 1 and the component 2 in the JOB of ID = 005. Then, when the conditions of the plant name "PL1", the series "#1", and the machine number "1" are set on the setting screen illustrated in FIG. 10 to display the information about components mounted on this machine, the information indicating that a service life of 70000 has been registered for the component 1 and the component 2 in the JOB of ID = 005 (a JOB corresponds to an operation in one period of time) is displayed.

In the related art, a user has set the service lives of components on a row-by-row basis on the screen illustrated in FIG. 11. According to the present embodiment, the above operation can be done automatically and efficiently by registering and reflecting condition tables.

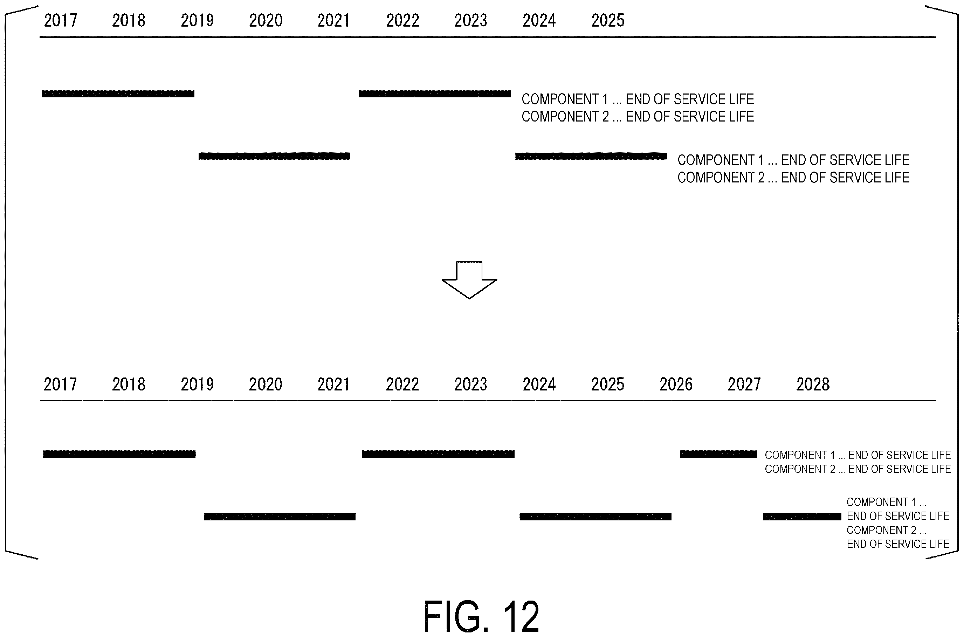

FIG. 12 is a second diagram illustrating an example of a parts rotation plan table according to an embodiment of the present disclosure.

When the setting range of inspection and operation information is changed from "2017/03 to 2025/11" to "2017/03 to 2028/12" on the condition table application timing screen 400 and the service lives of the component 1 and the component 2 are changed from "60000" hours to "70000" hours on the condition table setting screen 200, the parts rotation plan table created by the operation plan creation unit 11 is automatically changed from the upper figure to the lower figure in FIG. 12. When the end of the service life of a component approaches, the parts rotation plan table displays to that effect. The user considers replacing the component at the inspection immediately after "COMPONENT 1 ... END OF SERVICE LIFE" is displayed.

According to the present embodiment, it is possible to register the settings (condition tables) of operating conditions of a machine, which is operated with components replaced at a time of an inspection, including the schedules of inspections and operations between inspections, service lives of components, and inspections in which components can be replaced, and create a parts rotation plan table by automatically reflecting the registered settings. Consequently, the work efficiency for creating a parts rotation plan table can be increased. Because the registered settings can be used any number of times, it is possible to set various operating conditions and create parts rotation plan tables under the various operating conditions. Comparison between parts rotation plan tables for operations under a number of operating conditions facilitates the selection of an efficient (for example, low cost) parts rotation method. The ease of simulation of parts rotation facilitates the expansion of a simulation target to all plants and the extension of a time range of forecast. Accordingly, the accuracy of the demand forecast for components is improved. This allows a user to minimize the purchase of expensive components.

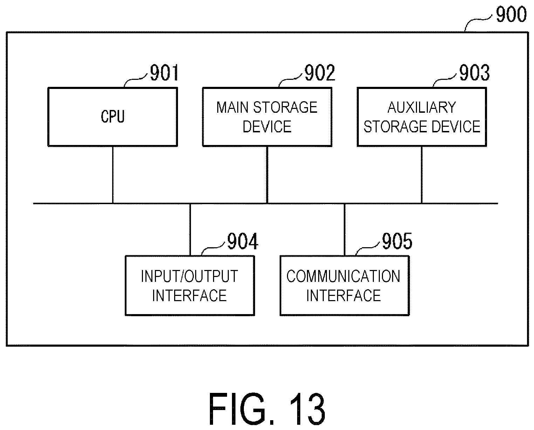

FIG. 13 is a diagram illustrating an example of a hardware configuration of an operation plan creation device according to each embodiment.

A computer 900 includes a CPU 901, a main storage device 902, an auxiliary storage device 903, an input/output interface 904, and a communication interface 905.

The operation plan creation device 10 described above is installed in the computer 900. The respective functions described above are stored in the auxiliary storage device 903 in a format of a program. The CPU 901 reads the program from the auxiliary storage device 903, develops the program to the main storage device 902, and executes the above-mentioned processing in accordance with the program. The CPU 901 secures a storage area in the main storage device 902 in compliance with the program. The CPU 901 secures a storage area for storing data under processing in the auxiliary storage device 903 in compliance with the program.

Note that a program for implementing the whole or part of functions of the operation plan creation device 10 is recorded in a computer readable recording medium, and a computer system is caused to read and execute the program that is recorded in the recording medium to execute the processing of respective functional units. The "computer system" here includes hardware such as an operating system (OS) or peripheral equipment. If a world wide web (WWW) system is used, the "computer system" also includes a home page providing environment (or a display environment). The "computer readable recording medium" refers to a portable medium such as a CD, a DVD, or a USB, or a storage device such as a hard disk built in a computer system. When this program is distributed to the computer 900 through a communication line, the computer 900 receiving the distribution may develop the program to the main storage device 902, and may execute the above-mentioned processing. The above-described program may implement part of the functions described above, and furthermore, also implement the functions described above in combination with a program already recorded in the computer system.

In the foregoing, certain embodiments of the present disclosure have been described, but all of these embodiments are merely illustrative and are not intended to limit the scope of the invention. These embodiments may be implemented in various other forms, and various omissions, substitutions, and alterations may be made without departing from the gist of the invention. These embodiments and modifications are included in the scope and gist of the invention and are also included in the scope of the invention described in the claims and equivalents thereof.

### Notes

An operation plan creation device, an operation plan creation method, and a program described in an embodiment can be understood as follows, for example.
(1) An operation plan creation device 10 according to a first aspect includes: an operation plan creation unit 11 that creates an operation plan (a parts rotation table) for components of a machine, which is operated with the components replaced at a time of an inspection, for a predetermined period of time from an operation start including a date of the inspection; a condition table management unit 12 that receives settings of condition table information necessary for creating a schedule of the inspection in a future and including inspection-related setting information, attribute information of the components, and information about operating conditions of the machine, and registers the condition table information; and a condition table application unit 13 that receives selection of one or multiple condition table information to be applied to the operation plan from among the condition table information registered, and instructs to reflect the condition table information selected into the operation plan. The operation plan creation unit recreates the operation plan based on the condition table information as instructed by the condition table application unit.
   Accordingly, the work efficiency for creating the operation plan can be increased.
(2) An operation plan creation device 10 according to a second aspect is the operation plan creation device 10 according to (1), wherein the condition table management unit displays a condition table setting screen 200 on which a pattern of the inspection, an interval of the inspection, an application start date of the pattern of the inspection, the application end date of the pattern of the inspection can be set.
   Accordingly, the schedule for future periodic inspection can be determined. When the schedule for future periodic inspection is determined, a parts rotation can be planned in accordance with the schedule.
   The inspection pattern, the inspection interval, the application start date of the inspection pattern, and the application end date of the inspection pattern are examples of the inspection-related setting information.
(3) An operation plan creation device 10 according to a third aspect is the operation plan creation device 10 according to (2), wherein a service life and a necessity of replacement can be set for each of the components mounted on the machine on the condition table setting screen 200.
   A parts rotation plan varies depending on a setting of a service life of a component and a setting of whether the component can be replaced at a time of an inspection. By making these settings, it is possible to create a parts rotation plan after a service life or the like is changed. This allows the creation of a highly accurate parts rotation plan table that fits the actual situation. Accordingly, the accuracy of the demand forecast for components is also improved.
   The service life of each component, and the necessity of replacement of each component at a time of an inspection are examples of the attribute information of components.
(4) An operation plan creation device 10 according to a fourth aspect is the operation plan creation device 10 according to (2) and (3), wherein an operation time of the machine for a predetermined period of time can be set on the condition table setting screen 200.
   The operation time of the machine affects a service life of a component and a timing of an inspection. By setting the operation time of the machine, it is possible to create a highly accurate parts rotation plan table that fits the actual situation. Accordingly, the accuracy of the demand forecast for components is also improved.
   The operation time of the machine is an example of the information about the operating conditions of the machine.
(5) An operation plan creation device 10 according to a fifth aspect is the operation plan creation device 10 according to (1) to (4), wherein the condition table management unit 12 displays a list display screen (a condition table list screen 100) that displays a list of the condition table information registered.
   Displaying a list of the condition tables registered facilitates the management of the condition tables. For example, wasteful operations such as creating the same condition table a number of times can be omitted. Further, missing condition tables can be grasped.
(6) An operation plan creation device 10 according to a sixth aspect is the operation plan creation device 10 according to (5), wherein the condition table information can be selected from among the condition table information displayed in a list on the list display screen so as to allow the condition table information selected to be copied.
   Because the registered condition table information can be copied, for example, when a similar condition table is applied to another machine of the same model, a condition table for that machine can be registered by simply copying a registered condition table and then changing a machine No. (machine ID) or the like, and thereby the workload can be reduced.
(7) An operation plan creation device 10 according to a sixth aspect is the operation plan creation device 10 according to (1) to (6), wherein the condition table application unit 13 receives selection of one or multiple condition table information from among the condition table information registered, and automatically creates the schedule of the inspection based on the condition table information.
   Because the schedule of the periodic inspection for a plurality of times in the future can be automatically created based on the condition table settings, a time for manually creating the schedule of the periodic inspection can be eliminated and thus work efficiency can be improved.
(8) An operation plan creation device 10 according to an eighth aspect is the operation plan creation device 10 according to (7), wherein the operation plan creation unit 11 creates the operation plan for the components for a period of time including the schedule of the inspection automatically created.
   Because the parts rotation plan according to the automatically created periodic inspection schedule can be automatically created, work efficiency can be improved.
(9) An operation plan creation method according to a ninth aspect includes: a step of creating an operation plan for components of a machine, which is operated with the components replaced at a time of an inspection, for a predetermined period of time from an operation start including a date of the inspection; a step of receiving settings of condition table information necessary for creating a schedule of the inspection in a future and including inspection-related setting information, information about operating conditions of the components, and information about operating conditions of the machine, and registering the condition table information; a step of receiving selection of one or multiple condition table information to be applied to the operation plan from among the condition table information registered; and a step of recreating the operation plan based on the condition table information selected.
(10) A program according to a tenth aspect causes a computer to execute: a step of creating an operation plan for components of a machine, which is operated with the components replaced at a time of an inspection, for a predetermined period of time from an operation start including a date of the inspection; a step of receiving settings of condition table information necessary for creating a schedule of the inspection in a future and including inspection-related setting information, information about operating conditions of the components, and information about operating conditions of the machine, and registering the condition table information; a step of receiving selection of one or multiple condition table information to be applied to the operation plan from among the condition table information registered; and a step of recreating the operation plan based on the condition table information selected.

### Industrial Applicability

According to the operation plan creation device, the operation plan creation method, and the program described above, operating conditions related to parts rotation can be easily set.

### Reference Signs List

- 10: Operation plan creation device
- 11: Operation plan creation unit
- 12: Condition table management unit
- 13: Condition table application unit
- 14: Input reception unit
- 15: Output unit
- 16: Storage unit
- 20: Display unit
- 900: Computer
- 901: CPU
- 902: Main storage device
- 903: Auxiliary storage device
- 904: Input/output interface
- 905: Communication interface

## Claims

1. An operation plan creation device for a machine operated with components replaced at a time of an inspection, the device comprising:
an operation plan creation unit that creates an operation plan for the components for a predetermined period of time from an operation start including a date of the inspection;
a condition table management unit that receives settings of condition table information necessary for creating a schedule of the inspection in a future and including inspection-related setting information, attribute information of the components, and information about operating conditions of the machine, and registers the condition table information; and
a condition table application unit that receives selection of one or multiple condition table information to be applied to the operation plan from among the condition table information registered, and instructs to reflect the condition table information selected into the operation plan,
the operation plan creation unit recreating the operation plan based on the condition table information as instructed by the condition table application unit.

2. The operation plan creation device according to claim 1, wherein the condition table management unit displays a condition table setting screen on which a pattern of the inspection, an interval of the inspection, an application start date of the pattern of the inspection, and an application end date of the pattern of the inspection can be set.

3. The operation plan creation device according to claim 2, wherein a service life and a necessity of replacement can be set for each of the components mounted on the machine on the condition table setting screen.

4. The operation plan creation device according to claim 2 or 3, wherein an operation time of the machine for a predetermined period of time can be set on the condition table setting screen.

5. The operation plan creation device according to any one of claims 1 to 4, wherein the condition table management unit displays a list display screen displaying a list of the condition table information registered.

6. The operation plan creation device according to claim 5, wherein the condition table information can be selected from among the condition table information displayed in a list on the list display screen so as to allow the condition table information selected to be copied.

7. The operation plan creation device according to any one of claims 1 to 6, wherein the condition table application unit receives selection of one or multiple condition table information from among the condition table information registered,
and automatically creates the schedule of the inspection based on the condition table information selected.

8. The operation plan creation device according to claim 7, wherein the operation plan creation unit creates the operation plan for the components for a period of time including the schedule of the inspection automatically created.

9. An operation plan creation method for a machine operated with components replaced at a time of an inspection, the method comprising:
a step of creating an operation plan for the components for a predetermined period of time from an operation start including a date of the inspection;
a step of receiving settings of condition table information necessary for creating a schedule of the inspection in a future and including inspection-related setting information, attribute information of the components, and information about operating conditions of the machine, and registering the condition table information;
a step of receiving selection of one or multiple condition table information to be applied to the operation plan from among the condition table information registered; and
a step of recreating the operation plan based on the condition table information selected.

10. A program for a machine operated with components replaced at a time of an inspection, the program causing a computer to execute:
a step of creating an operation plan for the components for a predetermined period of time from an operation start including a date of the inspection;
a step of receiving settings of condition table information necessary for creating a schedule of the inspection in a future and including inspection-related setting information, attribute information of the components, and information about operating conditions of the machine, and registering the condition table information;
a step of receiving selection of one or multiple condition table information to be applied to the operation plan from among the condition table information registered; and
a step of recreating the operation plan based on the condition table information selected.
